# EUROPEAN PATENT SPECIFICATION

(11) **EP 2 160 999 B1**
(45) Date of publication and mention of the grant of the patent: **20.07.2011**
(21) Application number: 09014663.0
(22) Date of filing: 28.02.2006
(51) Int. Cl.: A61C 8/00

(54) **One-part implant with a hydroxylated soft tissue contact surface**
Einteiliges Implantat mit hydroxylierter Kontaktoberfläche für weiches Gewebe
Implant d'une seule pièce avec une surface hydroxylée pour venir en contact avec un tissu mou

(43) Date of publication of application: 10.03.2010
(62) Divisional of application: 06004060.7
(73) Proprietor: Straumann Holding AG, 4002 Basel (CH)
(72) Inventor: Schwarz, Frank, Dr., 40589 Düsseldorf (DE); Becker, Jürgen, Prof.Dr., 40225 Düsseldorf (DE); Wieland, Marco, 4054 Basel (CH); Dard, Michel, 4410 Liestal (CH)
(74) Representative: Schaad, Balass, Menzl & Partner AG

(56) References cited:
- WO-A-00/44305
- WO-A-03/039390
- FR-A1- 2 623 709
- US-A1- 2005 064 007
- US-A1- 2005 106 534

## Description

The present invention relates to a method for producing a one-part implant according to claim 1

Implants which are used for insertion into bone, for example for attachment of artificial teeth, are known per se. Different types of implants are known, for example one-part implants. A one-part implant comprises an anchoring part for anchoring within the bone and a mounting part. Onto the mounting part prosthesis elements, such as bridges or crowns, are screwed or cemented usually using intermediate so-called abutments.

A central property of said implants is their osteointegration time, that is to say the time that passes before the bone substance has become connected with sufficient strength and permanently to the bone contact surface, that is to say it has become integrated with it.

Therefore, much effort has been made in order to improve the osteointegration of said implants, such as described in WO 03/045268. It was shown that the osteointegration time was significantly shorter if the bone contact surface of the implant is roughened and hydroxylated or silanated.

US 5,397,362 discloses an implant prosthesis comprising a substrate of ceramic material, a glass layer coated over the adhering interface of the substrate and a thermally sprayed layer of calcium phosphate based material formed over the glass layer.

US 2004/0049287 discloses an endosseous implant having a surface with a smooth or rough texture, whereby said surface has been treated with at least one pharmaceutically acceptable organic compound carrying at least one phosphonic acid group or a derivative thereof. It has been found that the modified surfaces of said implants enhance the bone bonding strength.

However, there is considerable evidence supporting the view that the supracrestal connective tissue plays a fundamental role in establishing an effective seal between the oral environment and the endosseous part of a dental implant. Indeed, the presence of bacteria on the implant surface may lead to an inflammation of the peri-implant mucosa, and, if left untreated, the inflammation spreads apically and results in bone resorption. As a consequence of the fact that rough surfaces accumulate and retain more plaque than smooth surfaces, nowadays, the soft tissue contact surface of implants is highly polished (see Oral Implantology, Thieme Verlag, 1996, page 438).

Various experiments have been carried out to investigate the difference of early inflammatory response to mucosa-penetrating implants prepared with varying surface roughness. Despite the fact that a rough surface may accumulate greater amounts of plaque than a smooth surface, no relation was found between inflammatory response and implant surface roughness (Wennerberg et al, J. Clin. Periodontol 2003: 30: 88-94; Quirynen et al, The International Journal of Oral and Maxillofacial Implants, 11, No. 2, 1996). US 5,496,374 discloses an orthopaedic, dental or soft tissue implant which accelerates implant-tissue bond formation. Said implant is made of ceramic and has been exposed to ion beams.

WO 00/44305 discloses an implant having improved osteointegration characteristics. The implant consists of titanium, or a titanium alloy and is suitable for the implantation in bones. The implant is provided with a roughened, hydroxylated and hydrophilic bone contact surface, which is at least sealed in a gaslight and liquidtight covering.

WO 03/039390 discloses a dental implant having an elongated body with a first and a second end portion and a root on one end portion for attaching to a patient's jawbone to replace the root of a removed tooth. The root portion has an anatomically shaped portion between the end portions of the body for fitting into a jawbone opening below the gum, tissue of a patient when the root is attached to a jawbone.

US 2005/0106534 discloses a dental implant comprising an anchoring part for anchoring within the bone and a mounting, part for receiving a prosthetic build-up construction, wherein the anchoring part and the mounting part are configured integrally, of a material based on zirconia. At, least the anchoring part is pre-treated at its outer surface at least partially by a subtractive removing process or is provided with a coating, which facilitates an ossification.

US 2005/0064007 discloses an osteogenic implant with improved osteointegration properties and a method for the preparation, thereof. According to this method, the implant surface is roughened and subsequently treated with an electrolytic or chemical etching procedure until a hydroxylated surface has been produced, and at least partially covered, with a polypeptide comprising one or more, of an osteogenic growth peptide a transforming growth factor and, an steocalcin.

It is the problem of the present invention to provide a method for producing an implant with improved soft tissue integration.

The problem is solved by the method according to claim 1.

Surprisingly it was found that a one-part implant produced by the method according to claim 1 comprising an anchoring part and a mounting part, whereby the anchoring part and the mounting part are configured in one piece, and the anchoring part is subdivided into a bone contact surface and a soft contact surface, has the potential to promote formation of soft tissue attachment . In contrast to conventional implants having a roughened, in some cases also hydroxylated bone contact surface and a smooth unhydroxylated soft tissue contact surface, the implant according to the present invention leads to the formation of new connective tissue adjacent to the soft tissue contact surface of the implant and tends to be in close contact with said surface. The loose connective tissue seems to become organized and replaced by newly formed collagen fibers, originating from its outer zone. These fibers tend to be organized in a perpendicular way towards the implant surface, similarly to the naturally occurring fibers most responsible for compensating forces on the tooth.

"Hydroxylated" in terms of the present invention means hydroxyl groups which are present in the outermost atomic layer of the implant surface. If the implant comprises titanium, zirconium, tantalum, niobium, hafnium or alloys thereof as well as chemically similarly reacting alloys, it is assumed that the surface of said metal oxidizes spontaneously in air and water and that a reaction then takes place with water on the surface to form hydroxyl groups. This surface containing hydroxyl groups is referred to in the literature as a "hydroxylated" surface; cf. H. P. Boehm, Acidic and Basic Properties of Hydroxylated Metal Oxide Surfaces, Discussions Faraday Society, vol. 52, 1971, pp. 264-275. A metal surface whose hydroxyl groups are covalently blocked, e.g. because of chemical modification, is not a "hydroxylated." surface in terms of the present invention.

The soft tissue contact surface of the implant obtained by the method according, to claim 1 is completely hydroxylated. Such an implant showed good results in vivo and said implants are economically interesting and can be produced in a controlled process. In addition it has been shown that with the implants according to the present invention the healing process is improved, that is a good osteointegration as well as a excellent soft tissue integration. Therefore, the implants comprise a reduced risk of periimplantitis and as a consequence fewer implants will have to be replaced. Due to their inorganic purity, meaning that the soft tissue contact surface is free of organic compounds, the surface charge is better available. Therefore, the surface is hydrophilic, which results in an improved soft tissue integration. Therefore they do not bear the risk of autoimmune reaction and other unwanted side effects.

The soft tissue contact surface of the implant obtained by the method according to claim 1 is roughened and hydroxylated. A roughened surface in terms of the present invention means a macroscopic texture of the surface which is obtained for example by sandblasting the soft tissue contact surface. It has been found that if the soft tissue contact surface is roughened and hydroxylated the blood coagulum is stabilized which accelerates the healing procedure.

The soft tissue contact surface of the implant obtained by the method according to claim 1 is hydrophilic. In terms of the present invention, the soft tissue contact surface is referred to as "hydrophilic" if it is freely accessible to the body fluid and not covered with foreign substances, for example substances with a hydrophobic action. Various volatile hydrocarbons are conventionally present in non-purified air. These are rapidly adsorbed in a thin layer by hydroxylated and hydrophilic surfaces, whereafter such surfaces are no longer hydrophilic. Likewise, such a hydroxylated and hydrophilic surface can become hydrophobic if the hydroxyl groups present on the surface associate or react chemically e.g. with carbon dioxide present in the air or with organic solvents, such as methanol or acetone, introduced via the cleaning process. The hydrophilic properties of the soft tissue contact surface may result in a higher wettability when compared to an untreated soft tissue contact surface. A higher wettability may promote formation of the soft tissue. Further, the charge on the surface is better available which may accelerate the formation of soft tissue attachment as well.

The implants obtained, by the method according to claim 1 comprise mainly a metal selected from the group consisting of titanium, zirconium, niobium, hafnium or tantalum, preferably titanium or zirconium. Alternatively the implants comprise an alloy of metals selected from the group consisting of titanium, zirconium, niobium, hafnium or tantalum, preferably a binary titanium / zirconium alloy. Such implants, their nature and the metal materials used to produce them are known per se and are described for example in J. Black, G. Hastings, Handbook of Biomaterials Properties, pages 135-200, published by Chapman & Hall, London, 1998.

The present invention relates to the process for preparing the above disclosed implant.

To obtain the hydroxylated surface, the soft tissue contact surface of the one-part implant is etched with a mixture of hydrochloric acid (conc.), sulforic acid (conc.) and water in a weight ratio of about 2:1:1. The soft tissue contact surface is then washed with pure water in an inert atmosphere.

A roughened soft tissue contact surface is obtained by sandblasting said surface and converting the sandblasted surface to a hydroxylated and hydrophilic state in a separate process step.

The roughened soft tissue contact surface is produced by sandblasting said surface and then treating the mechanically roughened surface by a chemical process until a hydroxylated and hydrophilic surface is formed.

The preferred procedure is to sandblast the soft tissue contact surface of the one-part implant, e.g. with aluminium oxide particles having a mean size of 0.25-0.5 mm, and then treat it at elevated temperature with a hydrochloric acid/sulfuric acid mixture and wash it with pure distilled and carbon-free (CO₂ and other carbons) water.

The hydroxylated soft tissue contact surface of the implant is after such a treatment free of organic debris and has increased wettability. As a result, the implant becomes more intimately involved with the surrounding bone and tissue structure.

Whatever the case may be, according to the invention the one-part implant is not subjected to further aftertreatment, i.e. it is not treated with alcohol, acetone or any other organic solvent. In particular, said pure water contains neither carbon dioxide nor hydrocarbon vapours and especially no acetone and no alcohols like methanol or ethanol. However, it can contain special additives as described below. The "pure" water used for washing has preferably been distilled several times or prepared by reverse osmosis; the water has preferably been prepared in an inert atmosphere, i.e. under reduced pressure in a nitrogen or noble gas atmosphere, for example.

Following these procedures, the one-part implant obtained is left in pure water and stored in a closed vessel or a covering. In addition to water, the interior of the covering can contain inert gases, for example nitrogen, oxygen or a noble gas such as argon. The one-part implant obtained is preferably stored in pure water optionally containing selective additives, and in a covering which is practically impermeable to gases and liquids, especially to carbon oxides, the interior of the covering being devoid of any compounds capable of impairing the activity of the implant surface.

Alternatively, the implant could be placed in an inert gas atmosphere.

The one-part implant produced by the method according to the invention, or at least its hydroxylated and hydrophilic surface, is preferably sealed in a gas-tight and liquid-tight covering, the interior of the covering being devoid of any compounds capable of impairing the biological activity of the implant surface. In this way it is avoided that the surface loses its activation fully or partially by means of air constituents, before the dental implant is applied. In a preferred embodiment there is an reducing atmosphere in the interior of the covering. This gas-tight and liquid-tight covering is preferably a heat-sealed ampoule made of glass, metal, a synthetic polymer or some other gas-tight and liquid-tight material, or a combination of these materials. The metal preferably takes the form of a thin sheet, it being possible for polymeric materials and metal sheets, as well as glass, to be combined together to form a suitable packaging in a manner known per se.

Examples of suitable additives which can be incorporated in the pure water are cations and anions which already occur in the body fluid. In order to stabilize the positive charge the implant according to the present invention is preferably stored at a pH ranging from pH 3 to 7, preferably 4 to 6. Alternatively it is also possible to store the implant at a pH ranging from pH 7 to 10 in order to stabilize the negative charge. Preferred cations are Na⁺, K⁺, Mg²⁺ and Ca²⁺. The preferred anion is Cl⁻. The total amount of said cations or anions ranges preferably from about 50 mM to 250 mM, particularly preferably from about 100 mM to 200 mM, and is preferably about 150 mM. If the covering contains divalent cations, especially Mg²⁺, Ca²⁺, Sr²⁺ and/or Mn²⁺, on their own or in combination with the above-mentioned monovalent cations, the total amount of divalent cations present preferably ranges from 1 mM to 20 mM.

The invention is explained below on the basis of figures and illustrative embodiments, without in any way limiting the invention to the embodiments shown. The drawings show the following:
Fig. 1 a side view of a first embodiment of an implant according to the invention.
Fig. 2 a side view of an embodiment of an implant according to the invention slightly modified with respect to the embodiment of Fig. 1.
Fig. 3 a side view of a further embodiment of an implant according to the invention wherein the mounting part is slightly offset with respect to the anchoring part.

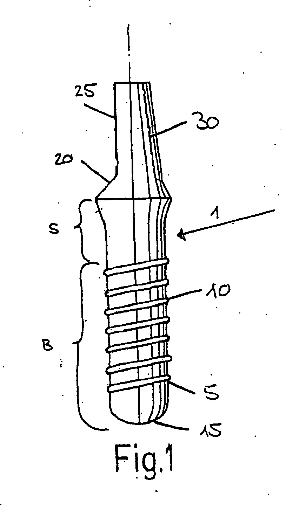

Figure 1 shows the different areas of an implant 1. It comprises an anchoring part 5 having a threaded section 10 and a rounded lower end 15. The anchoring part 5 at its upper end transitions via a slightly enlarged conical section to the outside into a mounting part 20 being integral therewith and extending within an extension of the longitudinal axis of the threaded section. The mounting part 20 has a frustoconical or a conical shape and is provided with a flattening 25 at one side thereof. At the side opposite the flattening 25 a groove 30 is provided within the outer surface that extends from the upper front surface of the mounting part 20 towards the lower side and ends in a conical section which forms the transition to the conical section of the anchoring part 5. The anchoring part 5 is subdivided into a bone contact surface B and a soft tissue contact surface S. In the boundary area of these surfaces, there is a transition area from bone contact surface B to soft tissue contact surface S, which transition area is assigned to both aforementioned areas. The question of whether this area, in the implanted state, is located in the bone or in the soft tissue depends on a large number of factors, for example the depth to which the implant is screwed, the tissue reaction, etc. The transition area has to be treated in the same way as the bone contact surface, in order to make sure, that in any case an optimal osteointegration is ensured. The bone contact surface of such implants is roughened, and hydroxylated and hydrophilic as well. The soft tissue contact surface of an implant obtained by the method according to the present invention is made of titanium, zirconium, tantalum, niobium, hafnium or alloys thereof as well as chemically similarly reacting alloys.

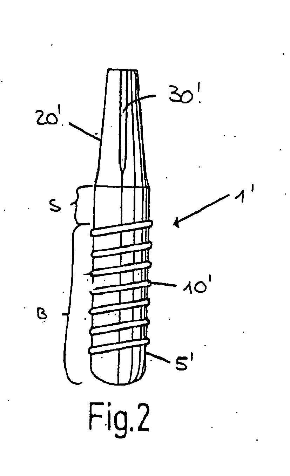

Fig. 2 shows a slightly modified embodiment of a dental implant 1' which again comprises an anchoring part 5' having a threaded section 10' being followed by a conical mounting part on which the groove 30' can be seen, since the dental implant 1' is depicted rotated by 90°C with respect to the dental implant 1' of fig. 1.

By contrast to the embodiment shown in Fig. 1 the dental implant 1' does not have a conical section within the transitional region between the anchoring part 5' and the mounting part 20'. Instead, the mounting part 20' is configured as a conical section directly adjoining the anchoring part 5' which is shaped cylindrically. Again on the side opposite to the groove 20' a respective flattening 20' may be provided, such as can be seen in Fig. 1. Also here the anchoring part 5' is subdivided into a bone contact surface B and a soft tissue contact surface S. The soft tissue surface is hydroxylated and roughened.

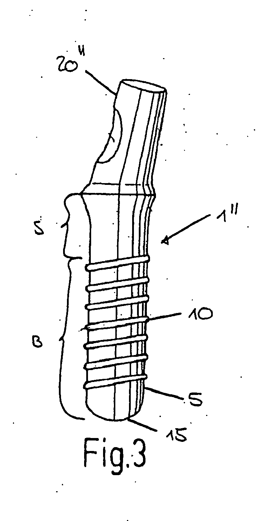

In Fig. 3 a further embodiment of a dental implant 1" according to the present invention is shown. The dental implant 1" comprises an anchoring part 5 corresponding to the embodiment according to Fig. 1 and having a threaded section 10 which transitions via an outer conical section into a mounting part 20" . The anchoring part 5" is subdivided into a bone contact surface B and a soft tissue contact surface S. The soft tissue contact surface is hydroxylated.

Again the mounting part 20" has a conical basic shape, however, is offset with respect to the longitudinal axis of the anchoring part 5, e.g. by an angle of about 15°, this being particularly suitable for applications within the incisor region in many cases.

The anchoring part 5 may, e.g. have an axial length of 10 mm, wherein the other dimensions result in a corresponding manner. However, it should be understood that the dimensions may be modified in a suitable way depending on the indication.

The examples which follow illustrate the invention.

### EXAMPLE 1: Implant with a roughened hydroxylated soft tissue contact surface

A common shape of a one-part implant was produced using the known CNC standard procedure.

The bone contact surface as well as the soft tissue surface of the anchoring part were sandblasted with particles having a mean size of 0.25-0.5 mm. The roughened surface was then treated for about five minutes at a temperature above 80°C with an aqueous hydrochloric acid (conc.) / sulfuric acid (conc.) mixture having an HCl:H₂SO₄:H₂O ratio of 2:1:1. The implant formed in this way was washed with pure water and then heat-sealed directly in a glass ampoule filled with pure water containing 150 mM Na⁺ ions, and the corresponding amount of Cl⁻ anions.

To test the soft tissue integration, the above implants were placed to four female fox hounds. Each animal received 6 implants bilaterally in the upper jaw and 10 implants bilaterally in the lower jaw. The implants with a roughened hydroxylated soft tissue contact surface showed unexpectedly a much better soft tissue integration than comparable implants with an unhydroxylated surface. Soft tissue adhesion was seen already after a few days, the soft tissue integration was apparent within two weeks.

## Claims

1. A method for producing a one-part implant (1) made of titanium, zirconium, tantalum, niobium, hafnium or alloys thereof for attachment of artificial teeth comprising an anchoring part (5) and a mounting part (20), whereby the anchoring part (5) and the mounting part (20) are configured in one piece, and the anchoring part (5) is subdivided into a bone contact surface B and a soft tissue contact surface S, wherein the bone contact surface as well as the soft tissue contact surface of the anchoring part are sand-blasted with particles having a mean size of 0.25 - 0.5 mm, said roughened surface being treated with a concentrated aqueous hydrochloric acid/concentrated sulphuric acid mixture having an HCl:H₂SO₄:H₂O ratio of 2:1:1 at a temperature above 80 °C for about five minutes.

## Patentansprüche

1. Ein Verfahren zur Herstellung eines einteiligen Implantats (1) aus Titan, Zirkon, Tantal, Niob, Hafnium oder Legierungen davon zur Verankerung von künstlichen Zähnen umfassend einen Verankerungsteil (5) und einen Aufbauteil (20), wobei der Verankerungsteil (5) und der Aufbauteil (20) aus einem Stück ausgebildet sind, und der Verankerungsteil (5) in eine Knochenkontaktfläche B und eine Weichgewebekontaktfläche S unterteilt ist, wobei die Knochenkontaktfläche und auch die Weichgewebekontaktfläche des Verankerungsteils sandgestrahlt wird mit Partikeln einer durchschnittlichen Grösse von 0.25 - 0.5 mm und die aufgeraute Oberfläche mit einer Mischung von konzentrierter wässriger Salzsäure/konzentrierter Schwefelsäure, die ein Verhältnis HCl: H₂SO₄: H₂O von 2:1:1 hat, bei einer Temperatur über 80°C für etwa fünf Minuten behandelt wird.

## Revendications

1. Procédé de fabrication d'un implant en une pièce (1) constitué de titane, zircon, tantale, niobium, hafnium ou alliages de ces métaux pour fixation de dents artificielles comprenant une partie d'ancrage (5) et une partie de montage (20), dans lequel la partie d'ancrage (5) et la partie de montage (20) sont configurées en une pièce, et la partie d'ancrage (5) est subdivisée en une surface de contact d'os B et une surface de contact de tissu mou S, la surface de contact d'os ainsi que la surface de contact de tissu mou de la partie d'ancrage étant sablées avec des particules ayant une taille moyenne de 0,25-0,5 mm, ladite surface rendue rugueuse étant traitée avec un mélange acide chlorhydrique aqueux concentré / acide sulfurique concentré ayant un rapport HCl:H₂SO₄:H₂O de 2:1:1 à une température supérieure à 80 °C pendant environ cinq minutes.
